# EUROPEAN PATENT APPLICATION

(11) **EP 2 028 103 A2**
(43) Date of publication of application: **25.02.2009**
(21) Application number: 08153982.7
(22) Date of filing: 02.04.2008
(51) Int. Cl.: B64D 9/00, B60P 7/08

(54) **Cargo barrier net for aircarft**

(30) Priority: 03.04.2007 GB 0706552
(71) Applicant: Amsafe Bridport Limited, Bridport, Dorset DT6 3QU (GB)
(72) Inventor: Brown, Julian, Bridport, Dorset DT6 4BJ (GB); Lawton, Stephen, Bridport, Dorset DT6 3LL (GB)
(74) Representative: Macpherson, Craig Stuart

(57) **Abstract**

A net (2) comprising a plurality of intersecting webbing members (6, 8), wherein the intersecting webbing members (6, 8) are stitched together at the intersection (12) with a spiral stitching pattern (14).

## Description

The present invention relates to a net and to a stitching pattern for connecting intersecting webbing members in a net. The net may be used for a wide variety of purposes, but it is particularly suited for use as a barrier net, particularly a cargo barrier net for use in aviation.

It is well known to use nets as barriers on aircraft to restrain cargo that would otherwise move and penetrate into areas occupied by aircraft personnel, critical equipment and systems, access door or emergency access routes during the acceleration and deceleration of the aircraft during take-off and landing and also during the extreme deceleration of the aircraft during emergency landing.

Conventionally, such nets comprise a network of textile straps to which securing means are fitted, e.g. shackles, quick release fittings, snap latches, single and double stud floor fittings, to connect the net to the aircraft structure.

The success of the net to act as a barrier to the moving cargo relies on the net forming a profile when loaded that does not encroach into the areas it is intended to protect, whilst safely distributing the resulting tensile load into the aircraft structure.

Conventional barrier nets are typically made from materials having a relatively high elongation at break, such as polyester or nylon. Polyester has an elongation at break of approximately 15-17% and nylon has an elongation at break of approximately 22-24%. The webbing members are usually stitched together at their intersections, which helps to maintain the shape of the net and also ensures that the strap lengths between intersections are approximately equal. This means that when the load is applied to the net the load distribution throughout the net should be as designed.

Conventional stitching patterns used to join intersecting webbing members include the "box and cross" stitch pattern and the "zig-zag WW" stitch pattern. The box and cross stitch pattern comprises a square or rectangular outer stitch pattern with an inner cross stitching pattern extending between the corners of the square. The lines of stitching defining the box and cross may be single, double, or even triple lines, depending on the required strength of the stitching pattern. In the zig-zag WW pattern an outer box is either square or rectangular and the inner pattern is in the form of a letter W with an upside down letter W superimposed on top. Again, the lines of stitching defining the zig-zag WW pattern may be single, double, or even triple lines, depending on the required strength of the stitching pattern. Other stitching patterns are also known and US 6,244,803 discloses one such stitching pattern. A unifying characteristic between all currently known and used stitching patterns is that at least some of the lines of stitching which form the pattern cross over other of the lines in the pattern. This involves the needle which applies the stitching pattern moving over the same area of webbing more than once.

Due to the high load requirements which the barrier nets will be subjected to they are frequently constructed from multiple plies of polyester or nylon webbing. Individual plies can be sewn separately at their intersections and then joined together using either plastic ties or secondary webbing straps wrapped around the intersection in a figure of eight. Alternatively, multiple plies can be stitched together in a single stitching operation. These methods of fixing together multiple plies of webbing allows an applied load to be shared between several stitch patterns. Depending on the properties required of the net it is common for 2-5 plies of webbing to be used and in some cases even more.

Known barrier nets suffer from a number of disadvantages. The textile straps elongate under tensile load, which although in some cases can be an advantage in forming the desired profile when restraining the shifted cargo, in cases when the net is fitted in close proximity to the areas occupied by aircraft personnel, critical equipment and systems, or emergency access routes, the elongation of the net must be strictly limited. Limitation of the elongation of the net is currently achieved through the employment of multiple layers of textile straps as discussed above. However, multiple layers of textile straps substantially increase the weight of the cargo net and, depending on the number of layers required, can prove very difficult to manufacture.

It would therefore be preferable to make nets out of materials having a much lower elongation at break than currently used materials, e.g. nets comprising metallic fibre cables or "low elongation" plastics fibre materials. Nets made from "low elongation" plastics fibre materials (such as aramid fibre materials, e.g. Kevlar®) would be highly desirable since such nets would have a much lighter weight, a much higher strength to weight ratio and prevent cargo from penetrating into unwanted areas. The terms "low elongation", "lower elongation" and the like, as used herein, refer to webbing members having an elongation at break of less than 15% of their normal length.

Using high-strength, low elongation materials enables nets to be made from a single ply of webbing. This can dramatically reduce the overall weight of the net, but brings with it other potential problems. Rather than being shared between several stitch patterns, as is the case in nets made from multiple plies of webbing material, an applied load will be bourne by a single stitch pattern. Accordingly, the stitch pattern will need to be correspondingly stronger if it is to withstand the high shearing loads that will develop during loading of the barrier net.

The present inventors encountered a number of problems when they attempted to manufacture a barrier net constructed from intersecting webbing members made from materials having an elongation at break of less than 15%, such as aromatic polyamides, ultra high molecular weight polyethylenes and liquid crystal polymers. It was found that conventional stitching patterns used to join intersecting webbing members were not strong enough and the stitching pattern became the weak point of the net. It was also discovered that when webbing members were made from low elongation materials, such as Dyneema®, the fibres tended to bunch up when stitched making resewing over the same area very difficult.

It is the object of the present invention to overcome the problems associated with prior art nets, or to at least provide an alternative to them.

According to a first aspect of the present invention there is provided a net comprising a plurality of intersecting webbing members, wherein the intersecting webbing members are stitched together at the intersection with a spiral stitching pattern.

Contrary to the disclosure of US 6,244,803, the present inventors have made the surprising discovery that the optimum configuration for a stitching pattern is one in which the stitches are orientated in a spiral, rather than a variety of intersecting lines. The stitching pattern is ideally suited to any net in which the intersection, due to its relatively small size, will always be well below the maximum strength of the webbing. The term "webbing member(s)", as used herein, is a general term used to describe any length of material which can be formed into a netting strand and includes textile webbing, braid, rope and any other materials used in the manufacture of nets. The term "spiral", as used herein, refers to any pattern of stitching which emanates from a central point and moves progressively further away in units of increasing size. In an embodiment of the invention the units form a repeating pattern. The spiral stitching pattern can be stitched from the central point outwards or from the outside to the central point.

In an embodiment of the invention the spiral stitching pattern is arranged such that the stitches that form the stitching pattern do not cross each other. The exception to this is the so-called "finishing back" stitch. This is a feature of all stitching patterns and is the final stitch in the process used to finish the stitching. The requirement that the stiches do not cross does not apply to the "finishing back" stitch and it is intended that stitching patterns in which only the "finishing back" stitch crosses another stitch would fall within the scope of the present invention. The inventors discovered that the stitching pattern functions better when the lines of stitching do not cross each other. As discussed above, the inventors discovered that the fibres of low elongation materials tend to become bunched up and hard when stitched and this makes it very difficult to over stitch that area. However, in order to make an intersection as strong as possible it was desirable to have as many stitches as possible in the area of intersection. A spiral stitching pattern enables the number of stitches to be maximised, without the lines of stitching crossing.

In an embodiment of the invention the stitching pattern comprises a single continuous line of stitching.

In an embodiment of the invention the stitching pattern may be a square, circular or triangular spiral. The repeating units of the spiral may actually be of any regular shape.

In an embodiment of the invention the stitching pattern is substantially symmetrical in at least one axis. The term "substantially symmetrical" is used as the pattern will not be completely symmetrical as it begins from a single point and the stitching does not cross. However, the term "substantially symmetrical", as used herein, refers to the fact that the stitching pattern is almost symmetrical. It is preferred that the stitching pattern is substantially symmetrical in both the X and Y axes as the net will be loaded in both directions and this avoids the creation of a weak point.

In an embodiment of the invention the webbing members intersect at right angles.

In an embodiment of the invention the webbing members are single-ply. This results in a substantial reduction of weight.

In an embodiment of the invention the webbing members are manufactured from a material having an elongation at break of less than 15%. Advantageously, the webbing members may be manufactured from a material having an elongation at break of less than 10%, or even less than 5%.

In an embodiment of the invention the webbing members are manufactured from a material selected from the group comprising aromatic polyamides or Aramids (e.g. Kevlar®), ultra high molecular weight polyethylenes (e.g. Dyneema®) and liquid crystal polymers (e.g. Vectran®). These so-called high-strength, low elongation materials are particularly desirable for use in barrier nets as they do not elongate as much as conventional materials under load and they can be formed into lighter nets due to their high strength to weight ratio compared to conventional materials such as nylon and polyester. Nets made from such materials may be manufactured as single ply nets.

In an embodiment of the invention a thread manufactured from a material with an elongation at break of less than 15% is used to stitch the intersecting webbing members. The elongation at break of the thread is preferably less than 10%, more preferably less than 5%. In an embodiment of the invention the thread is selected from the group comprising aromatic polyamides, ultra high molecular weight polyethylenes and liquid crystal polymers._In barrier nets, particularly single ply nets, the intersection will always be a weak point. It is therefore advantageous to use a thread manufactured from a material which will maximise the strength of the intersection.

In an embodiment of the invention the net is a barrier net or it may be a cargo net. It is particularly preferred that the net is a 9g barrier net for use in the fuselage of an aircraft. According to a second aspect of the present invention there is provided a stitching pattern for connecting webbing members in a net, the stitching pattern comprising a spiral of stitches.

The other features according to this aspect of the invention are the same as those disclosed in relation to the stitching pattern used in connection with the net identified in the first aspect of the invention.

According to a third aspect of the present invention there is provided a method for connecting webbing members comprising placing a first webbing member on top of a second webbing member and stitching the two webbing members together using a spiral stitching pattern. Ideally the stitching pattern may be created as a computer model and the instructions for forming the stitching pattern can be sent electronically to a sewing machine.

The other features according to this aspect of the invention are the same as those disclosed in relation to the stitching pattern used in connection with the net identified in the first aspect of the invention.

In order to provide a better understanding of the present invention reference will be made to the accompanying drawings, solely by way of example, an embodiment of the invention, in which:
Fig. 1 shows a cargo barrier net;
Fig. 2 shows a close up of an intersection of horizontal and vertical webbing members in Fig. 1; and
Fig. 3 shows a stitching pattern according to the present invention in more detail.

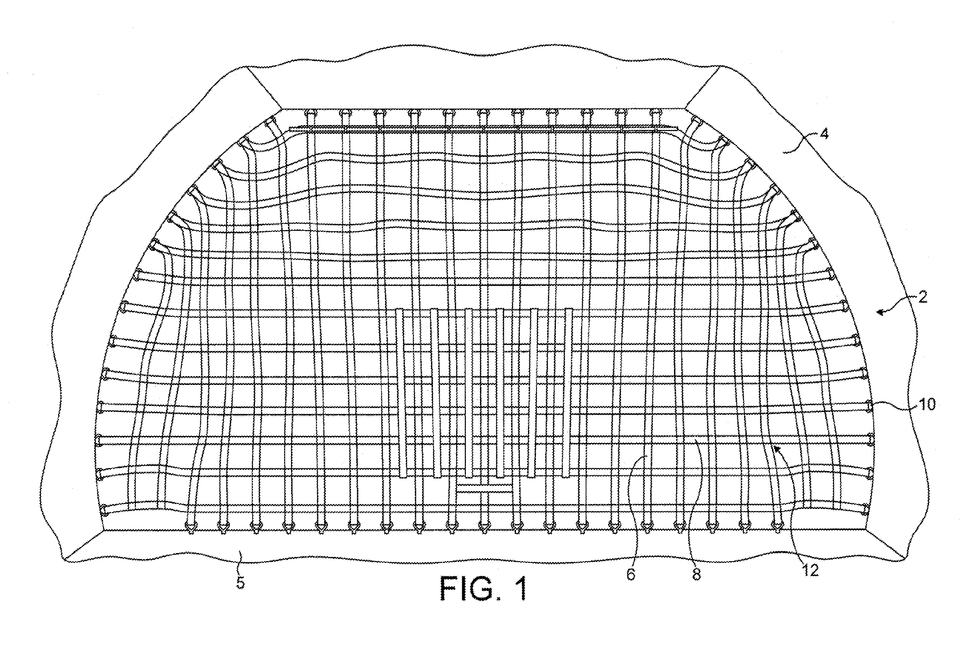

Referring firstly to Fig. 1, this shows a cargo barrier net 2 in the fuselage 4 of an aircraft, such as an Airbus A400M. The cargo barrier net 2 is a 9g barrier net, which means it is designed to safely accommodate the force exerted by the aircraft's maximum payload under conditions of 9g forward movement, while extending by a pre-determined maximum amount. Although the invention is described in relation to an aircraft cargo barrier net 2, it relates to nets generally and the description is by way of example only.

The cargo barrier net 2 comprises a plurality of laterally spaced single ply vertical webbing members 6 extending between the top of the fuselage 4 and the floor 5 of the aircraft and a plurality of vertically spaced single ply horizontal webbing members 6 extending between the side walls of the fuselage 4. The vertical and horizontal webbing members 6, 8 are in the form of woven textile webbing members made from a material having an elongation at break of less than 15% of its normal length. The webbing members 6, 8 are formed from Dyneema® sold by Royal DSM N.V. To allow the webbing members 6, 8 to withstand the high loads required of them they are formed with long straight warp fibres running through the core and surrounded by a tightly woven mesh of warp and weft fibres. The webbing members 6, 8 are 47mm wide, 4.2mm thick and have a maximum tensile strength of over 175kN, with a maximum elongation at break of 5.5%.

Other suitable materials for the webbing members 6, 8 include aromatic polyamides, such as Nomex® or Kevlar® sold by the Dupont Company, ultra high molecular weight polyethylenes and liquid crystal polymers, such as Vectran® sold by Kururay Ltd.

The net 2 comprises attachment means 10, in the form of permanent and semi-permanent attachment hooks, at the ends of at least some of the horizontal and vertical webbing members 6, 8. The attachment means 10 are attached to corresponding attachment points on the fuselage 4 and floor 5 of the aircraft.

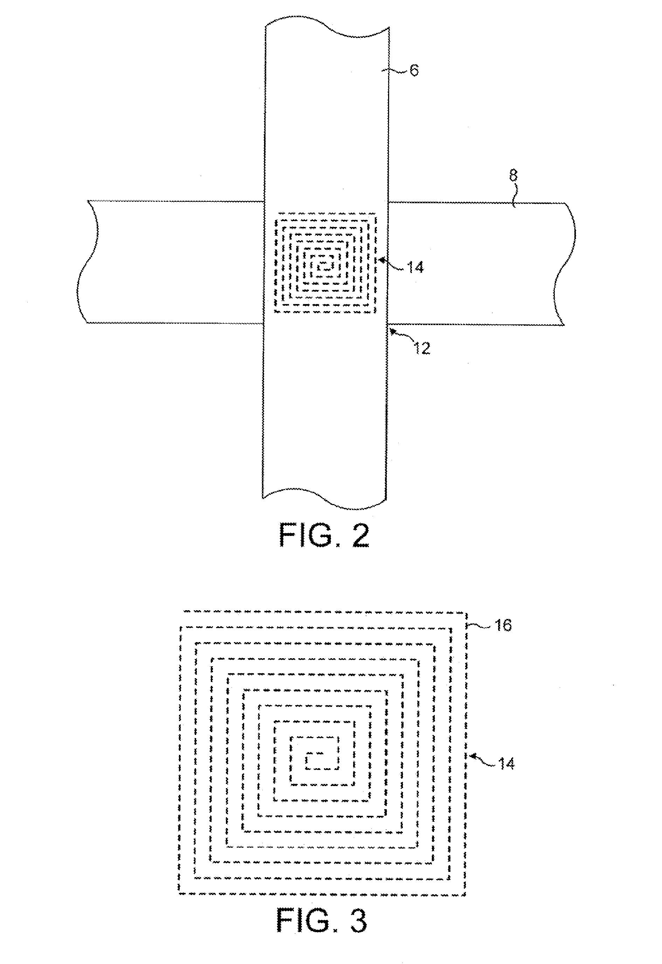

The vertical and the horizontal webbing members 6, 8 intersect at approximately right angles. In order to help the net 2 retain its desired configuration, which has been calculated to maximise the barrier properties of the net 2, the horizontal and vertical webbing members 6, 8 are stitched together at the intersections 12. One typical intersection 12 is shown in Figs. 2 and 3.

Fig. 2 shows a typical intersection 12 according to the present invention. The horizontal and vertical webbing members 6, 8 are stitched together using a novel stitching pattern 14 (shown in more detail in Fig. 3) which comprises a spiral stitching configuration. The same stitching pattern 14 can be used at each intersection 12 of the horizontal and vertical webbing members 6,8. In the case where the barrier net 2 is fitted in an Airbus A400M the stitching pattern 14 will be used at over two hundred intersections 12. The present inventors discovered that when the Dyneema® webbing members 6, 8 were stitched together the long straight warp fibres had a tendency to bunch up and form tight bundles of fibres, thus restricting the flexibility of the webbing and making it very hard. Once the long straight warp fibres had bunched up it became very difficult to re-sew over the same area of webbing. This meant that conventional stitching patterns could not be used and it was necessary to develop a new stitching pattern.

As can be seen from Figs. 2 and 3, the stitching pattern 14 comprises a square spiral formed from a continuous line of stitching 16 which begins at a central point and spirals outwards with straight sides of ever increasing size. The stitching pattern can be formed by stitching from the centre of the pattern to the outside or from the outside to the centre. The stitch size is approximately 3mm, with a 1.5 mm spacing between rows, and there are in excess of 350 stitches in the stitching pattern 14. The stitching pattern 14 shown in Fig. 2 is representative and actually contains less than 350 stitches, but is used to illustrate the principal. It is possible to form the stitching pattern 14 with less than 350 stitches and in some cases (e.g. small areas of intersection) this will be necessary. In an alternative embodiment the stitch size is approximately 3mm, with a 3mm spacing between rows, and there are 204 stitches in the stitching pattern. The term "square spiral" refers to the fact that the overall shape of the stitching pattern 14 is square, or almost square. Other spiral stitching patterns are also envisaged, such as circular, triangular, rectangular or any other shape of spiral in which the stitches do not cross.

The stitching pattern 14 is not strictly symmetrical, but it can be described as "almost symmetrical" in both the X and Y axes and this gives the stitching pattern 14 equal strength in both axes. The key to the success of the stitching pattern 14 is that it enables a high concentration of stitches to be fitted into the small area defined by the intersection of the webbing members 6,8, without the stitches crossing. The embodiment of the stitching pattern 14 illustrated in Fig. 2 shows14 vertical rows of stitching and 15 horizontal rows of stitching. The embodiment of the stitching pattern 14 illustrated in Fig. 3 shows 18 vertical rows of stitching and 19 horizontal rows of stitching. Ideally the number of vertical and horizontal rows are the same and the rows should be stitched as closely together as possible in order to maximise the total number of stitches in the pattern. Due to the width of the webbing members 6, 8 being 47mm the stitch pattern 14 is limited to an area of approximately 40mm x 40mm, to allow for sewing machine clamps to hold the webbing down during the stitching operation, while not taking up too much of the webbing and so reducing the stitch pattern size an hence its maximum tensile strength.

Despite providing a stronger intersection 12 than is achieved with the prior art stitching patterns, the strength of the intersection 12 will still be well below the maximum strength of the webbing members 6,8. In order to maximise the strength of the intersection 12 the thread used to join the webbing members 6,8 is also made from a high-strength, low elongation material with an elongation at break of less than 15%. In the illustrated embodiment the thread is made from the same material as the webbing members 6, 8 i.e. Dyneema®. The thread used was Dyneema® SK75 440 DTEX 1x4. Alternatively, the thread used could be Dyneema® SK75 880 DTEX 1x4. However, the thread may be made from other high-strength, low elongation materials, such as Kevlar® or Vectran®, which may be the same or different to the webbing material.

The embodiment of the invention illustrated in Figs. 1-3 represents one possibility and it will be clear to the person skilled in the art that the invention could have many more applications. The stitching pattern 14 is not limited to use in an aviation cargo barrier net 2 and it will be clear that it is a novel stitching pattern in its own right and that it could be used in a wide variety of nets.

In addition to being used to join vertical and horizontal webbing members 6, 8 the stitching pattern 14 may also be used to join parallel webbing members.

In order to test the strength of the stitching pattern 14 compared to a conventional stitching pattern straight tensile tests were conducted in accordance with British Standard BS 6F 100. A Denison T94029 tensile testing machine was used to perform the tests.

The test pieces were arranged as simple lap joints in which the end section of one length of webbing was laid over the end section of another length of webbing and a stitching pattern is applied to join the two lengths. The textile webbing used for the tests was 175kN Dyneema®.

Firstly, the stitching pattern 14 shown in Figs. 2 and 3 was tested. A load was applied to the free ends of the webbing to pull the two webbing members apart and the load at which the stitching pattern 14 gave way was noted. The test was repeated five times and the load at failure was recorded each time. The average load at failure for the square sided spiral stitching pattern 14 shown in Figs. 2 and 3 was 68.80kN.

The test was then repeated using a conventional box and cross stitching pattern as described above. For a 40mm x 40mm double box and cross stitching pattern the load at failure was 29.29kN.

The test was then repeated using a conventional zig-zag WW stitching pattern as described above. For a 41 mm x 41 mm double zig-zag WW stitching pattern the load at failure was 42.02kN.

The maximum tensile strength of the webbing used in the tests (Dyneema®) is stated to be 175kN (although it has actually been found to be nearer 200kN), so it can be seen that the load at failure for the stitching pattern shown in Figs. 2 and 3 is still way below the maximum tensile strength of the webbing. However, further testing has shown that it is possible to achieve much higher tensile strengths using an elongated spiral stitch pattern covering a greater length. For an elongated spiral stitching pattern 120mm long and 40mm wide the load at failure was found to be 106kN. Furthermore, for an elongated spiral stitching pattern 240mm long and 40mm wide the load at failure was found to be in excess of 150kN. The exact figure could not be accurately determined as the Denison T94029 has a maximum load capacity of 150kN.

Clearly such stitching patterns cannot be utilised at the intersections of 47mm wide webbing members. However, they may be suitable for other applications, such as connecting parallel webbing members.

## Claims

1. A net comprising a plurality of intersecting webbing members, wherein the intersecting webbing members are stitched together at the intersection with a spiral stitching pattern.

2. A net according to claim 1, wherein the spiral stitching pattern is arranged such that the stitches that form the stitching pattern do not cross each other.

3. A net according to claim 1 or claim 2, wherein the stitching pattern comprises a single continuous line of stitching.

4. A net according to any preceding claim, wherein the stitching pattern is a square, circular or triangular spiral.

5. A net according to any preceding claim, wherein the stitching pattern is substantially symmetrical in at least one axis.

6. A net according to any preceding claim, wherein the webbing members intersect at right angles.

7. A net according to any preceding claim, wherein the webbing members are single-ply.

8. A net according to any preceding claim, wherein the webbing members are manufactured from a material having an elongation at break of less than 15%, preferably less than 10% and most preferably less than 5%.

9. A net according to claim 8, wherein the webbing members are manufactured from a material selected from the group comprising aromatic polyamides, ultra high molecular weight polyethylenes and liquid crystal polymers.

10. A net according to any preceding claim, wherein a thread manufactured from a material selected from the group comprising aromatic polyamides, ultra high molecular weight polyethylenes and liquid crystal polymers is used to stitch the intersecting webbing members.

11. A stitching pattern for connecting webbing members in a net, the stitching pattern comprising a spiral of stitches.

12. A stitching pattern according to claim 11, wherein the stitches are arranged such that they do not cross each other.

13. A stitching pattern according to claim 11 or claim 12, comprising a single continuous line of stitching.

14. A stitching pattern according to any one of claims 11-13, wherein the stitching pattern is a square spiral, circular spiral or a triangular spiral.

15. A stitching pattern according to any one of claims 17-22, wherein the stitching pattern is substantially symmetrical in at least one axis.

16. A stitching pattern according to any one of claims 11-15, wherein a thread manufactured from a material selected from the group comprising aromatic polyamides, ultra high molecular weight polyethylenes and liquid crystal polymers is used to form the stitching pattern.

17. A net comprising a stitching pattern according to any one of claims 11-16.

18. A method for connecting webbing members comprising placing a first webbing member on top of a second webbing member and stitching the two webbing members together using a spiral stitching pattern.

19. A method according to claim 18, wherein the stitching pattern is formed according to any one of claims 11-17.
